# EUROPEAN PATENT APPLICATION

(11) **EP 4 122 669 A1**
(43) Date of publication of application: **25.01.2023**
(21) Application number: 21187283.3
(22) Date of filing: 22.07.2021
(51) Int. Cl.: B29C 35/02

(54) **START-UP PROCEDURE FOR A CURING METHOD, CURING METHOD, CURING SYSTEM AND CURING APPARATUS**

(71) Applicant: Airbus Operations GmbH, 21129 Hamburg (DE)
(72) Inventor: AMIN, Jaymeen, 21129 Hamburg (DE)
(74) Representative: KASTEL Patentanwälte PartG mbB

(57) **Abstract**

The invention relates to methods and devices enabling an optimized cure cycle with an optimized control of operation parameters in an autoclave (18). In order to monitor the curing and providing a real time control, a sample (16) having sensors (24) for measuring a component parameter which depends from the curing state is placed in the autoclave (18). A first cure cycle is obtained by modelling the component and its curing, especially by GIM and simulations. Then the actual monitored curing rate and measured properties of the cured sample (16) is compared with the model, and the cure cycle is updated when needed. Further, a similar sample (16) may be used for calibrating the curing during a first component production or during further productions of subsequent components (12).

## Description

The invention relates to a start-up procedure for a curing method to cure a fibre-reinforced composite component during a mass production of the component. Further, the invention relates to a curing method which is established using such a start-up procedure, as well as to a curing system and a curing apparatus configured to carry out such a start-up procedure and/or such a curing method.

More generally, the invention relates to methods, systems and apparatuses for curing composite components. Especially, the invention relates to methods and devices for optimized curing operations.

A common curing method for curing resins of fibre-reinforced composite components comprises placing the component in an autoclave, and operating the autoclave in accordance with a predetermined curing cycling defined by profiles of typical operations parameters such as temperature and pressure within the autoclave over the time of the curing.

The following literatures relate to curing methods as more cost-effective alternatives to curing in an autoclave for manufacturing or repairing thick and thin components using a mold and an elastic cover and controlling temperature and pressure by a fluid system:
[1] QURE Manufacturing Process | Quickstep- Webpage downloaded on July 12, 2021 under https://www.quickstep.com.au/qure/
[2] WO2007/003 011 A1

The OASIS project (https://project-oasis.eu/) worked on out-of-autoclave manufacturing of thick and thin components, using the method as described in [1] and [2] to optimize spring-in/spring-back properties.

In the following literatures, a modelling method for predicting properties of a resin such as it is used within fibre-reinforced composite materials is described which modelling method is generally known as "Group Interaction Modelling":
[3] D. Porter, Group Interaction Modelling of Polymer Properties, Marcel Dekker, New York (1995)
[4] GIM.pdf, download on July 12, 2021 under https://polymerdatabase.com/polymer physics/GIM.html
[5] J.P. Szabo, W.M. Davis, and R Petitpas: Dynamic Mechanical property prediction by Group Interaction Modelling, Technical Memorandum 98/219, Juli 1998, Defence Research Establishment Atlantic, downloaded on July 12, 2021 under https://cradpdf.drdc-rddc.gc.ca/PDFS/zbb69/p510048.pdf

It is an object of the invention to optimize curing of a fibre-reinforced composite component, especially a thermoplastic CFRP, in an autoclave.

For achieving this object, the invention provides a start-up procedure in accordance with claim 1. A curing method using such start-up procedure as well as a system and an apparatus for carrying out the start-up procedure form the subject-matter of the further independent claims.

Advantageous embodiments are given in the dependent claims.

The invention provides, according to one aspect thereof, a start-up procedure for a curing method to be conducted in a mass production of a fibre-reinforced composite component for curing said fibre-reinforced composite component wherein the curing method is conducted in a curing apparatus including an autoclave and an autoclave control system for controlling operation parameters of the autoclave in accordance with a defined cure cycle comprising a set of functions of autoclave operation parameters over the time, the start-up procedure comprising the steps:
a) modelling an initial cure cycle dependent from designed dimensions and nominal mechanical properties of the component including defining an initial profile of a specific component parameter which depends from the curing state,
b) placing a sample representative for the component within the autoclave, wherein the sample has at least one sensor impregnated therein for measuring the actual component parameter,
c) operating the autoclave in accordance with the first cure cycle while monitoring the actual component parameter with the at least one sensor,
d) measure the actual mechanical properties of the sample,
e) updating the cure cycle,
f) repeating steps b) to e) until the actual mechanical properties of the sample are in accordance with the nominal mechanical properties and then use the updated cure cycle for operating the curing apparatus in the production of the component.

Preferably, step a) comprises at least one or several of the steps:
a1) designing the dimensions, shape, form, and/or materials of the fibre-reinforced composite component, especially of a CFRP component;
a2) using Group Interaction Modelling (GIM) in order to predict properties of the cured resin of the fibre-reinforced composite component, preferably including dynamic mechanical properties of modulus und loss tangent as function of temperature and rate and/or the nonlinear stress-strain response through yield as a function of strain rate under tension and compression;
a3) predicting key properties of volume, thermal expansion coefficient and elastic modulus through a standard cure cycle, and using this as input for a simulation of residual stress development during curing,
a4) defining an initial profile of stress or strain induced during the curing into the component and/or of the cure rate as the component parameter.

Preferably, step b) comprises one or several of the steps:
b1) using a component as sample in a case where the at least one sensor does not influence the intended mechanical properties,
b2) using a sample other than the component wherein the sample is comparable in dimensions and complexity with the component;
b3) using a sample with sensors for measuring at least one of stress, strain and/or cure rate as the component parameter,
b4) using a sample with an optical fibre for optically measuring stress and/or strain within the component,
b5) using a sample with a graphene detector for real time measuring of the curing rate,
b6) using a sample having the same specific resin as the component,
b7) using a sample having the same fibres and the same fibre distribution as the component,
b8) using a sample having a dimension and/or a form which corresponds, within a predetermined tolerance, to the dimensions and/or the form, respectively, of the component.

Preferably, step c) comprises one or several of the following:
c1) controlling the autoclave in real time,
c2) setting the autoclave operation parameters in real time in accordance with the first cure cycle;
c3) monitoring and controlling real time operations of the autoclave for curing the specific resin of the sample by comparing the measured specific component parameters with the profile of the specific component parameters achieved by the modelling of step a).

Preferably, step d) comprises one or several of the following:
d1) measure the actual properties of the sample by destructive testing;
d2) measure the actual properties of the sample by non-destructive testing.

Preferably, step e) comprises one or several of the following:
e1) update the cure cycle using data from the monitoring of step c),
e2) update the cure cycle using data from the measuring of step d),
e3) update the profile of the component parameter,
e4) comparing the measured specific component parameter with the model used in step a),
e5) comparing the measured specific component parameter against a modelled parameter achieved by a Group Interaction Model of the specific resin of the component.

Preferably, step f) comprises a step of calibrating of a component cure cycle comprising:
f1) placing an actual component to be cured together with a sample having the at least one sensor impregnated to measure the actual component parameter which depends from the curing state,
f2) operating the autoclave in accordance with the updated cure cycle obtained in step e) and monitoring the actual component parameter with the at least one sensor in the sample,
f4) updating the cure cycle to obtain a calibrated component cure cycle to be used in further production of the component.

Preferably, the step of calibrating the component cure cycle comprises:
f3) measuring the actual mechanical properties of the sample and/or the component cured in step f2), wherein f4) is conducted on basis of the data obtained in step f3).

According to another aspect, the invention provides a method for curing a fibre-reinforced composite component in a mass production of the component using a curing apparatus including an autoclave and an autoclave control system for controlling operation parameters of the autoclave in accordance with a defined cure cycle comprising a set of functions of autoclave operation parameters over the time, wherein the method comprises conducting the start-up procedure according to any of the preceding embodiments, and operating the autoclave in accordance with the cure cycle obtained thereby.

According to another aspect, the invention provides a curing system for conducting the start-up procedure of any of the preceding embodiments or the curing method as mentioned above, comprising a curing apparatus including an autoclave and an autoclave control system for controlling operation parameters of the autoclave in accordance with a defined cure cycle and a set of samples made of the same material as the component to be produced and having at least one sensor impregnated therein for measuring a specific component parameter which depends from a curing state.

According to another aspect, the invention provides a curing apparatus including an autoclave and an autoclave control system for controlling operation parameters of the autoclave in accordance with a defined cure cycle wherein the autoclave control system is configured to carry out the start-up procedure of any of the aforementioned embodiments or of the curing method as mentioned above.

Preferred embodiments of the invention provide an optimisation of curing cycle of thermoplastic CFRP in an autoclave.

Preferred embodiments of the invention propose the steps of monitoring and controlling real time operations of an autoclave for curing a specific resin by comparing the measured specific parameters, for example induced strain, curing rate etc. of the component against Group Interaction Model of the resin and updating the curing cycle used by the autoclave.

Some advantages of preferred embodiments of the invention are:
- no over or under curing of part(s), which can reduce operation time of expensive autoclave and reduce the cost of non-quality (tolerances, scrap rates etc.)
- no liquid shims (i.e. no need to do a qualification of additional materials etc.).

Embodiments of the invention are explained in more detail below referring to the accompanying drawings in which:
- Fig. 1: a schematic block diagram showing a curing system including a sample and a curing apparatus comprising an autoclave and an autoclave control system;
- Fig. 2: a schematic block diagram of a first embodiment of the sample;
- Fig. 3: a schematic block diagram showing a sensor for a second embodiment of the sample;
- Fig. 4: a schematic diagram showing the second embodiment of the sample;
- Fig. 5: a flow diagram showing a first part of a preferred embodiment of a start-up procedure for establishing a curing method using the curing system of Fig. 1;
- Fig. 6: a flow diagram showing a second part of the preferred embodiment of the start-up procedure;
- Fig. 7: a schematic block diagram of the curing system of Fig. 1 during the second part of the preferred start-up procedure.

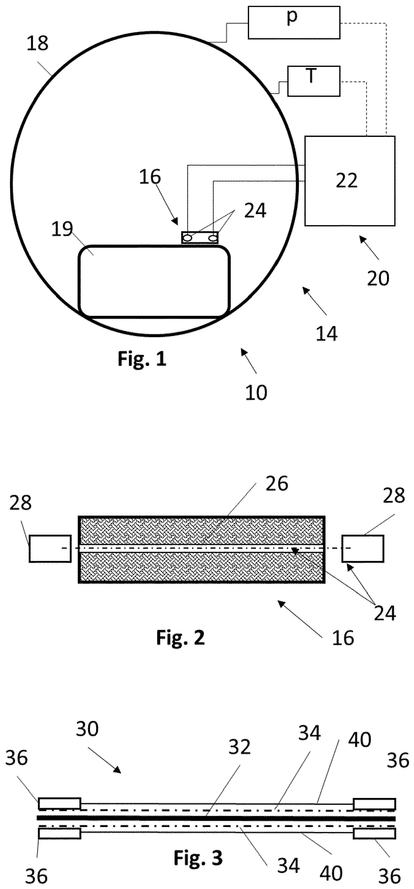

Fig. 1 shows a curing system 10 configured to cure a specific fibre-reinforced composite component during a mass production of the component. Especially, the curing system 10 is adapted to cure a carbon fibre-reinforced plastic (CFRP) component of an aircraft such as an airplane.

The component 12 (not shown in Fig. 1) has a specific dimension, a specific form, a specific fibre distribution and a specific resin. The component has been designed such that it has nominal mechanical properties. In order to achieve these designed mechanical properties, curing of the resin is to be conducted in the curing system 10 according to a pre-defined curing operation in an environment which is controlled according to specific pre-defined profiles of atmosphere parameters such as pressure, temperature, humidity, composition of the atmosphere, and so on.

In order to conduct the specific curing operation, the curing system 10 comprises a curing apparatus 14 and a sample 16. The curing apparatus 14 is configured to conduct the curing operation. The curing apparatus 14 has an autoclave 18, wherein a mold 19 can be arranged within the autoclave 18, and an autoclave control system 20 with a real time controller 22 which controls the autoclave operation parameters such as temperature T, pressure p, and possibly further parameters (such as humidity, composition of the atmosphere, ...) of the atmosphere within the autoclave 18 in accordance with a defined cure cycle which contains profiles for the autoclave operation parameters, or in other words, defined control curves (functions) or look-up tables for controlling the autoclave operation parameters over the time of the curing operation in accordance with predefined values per time.

The sample 16 is used to obtain an optimised cure cycle for the curing operation of the component 12 during the mass production.

The sample 16 is representative for the component 12. Especially, the sample 16 has a comparable complexity and comparable dimensions as the component 12. In more detail, the sample 16 has dimensions which correspond to the dimensions of the component 12 within a pre-defined tolerance, and/or a form and shape which corresponds to the component 12 within a pre-defined tolerance. Further, the sample 16 has a fibre distribution which is comparable to that of the component 12. Still further, the sample 16 has the same specific resin as the component 12.

The sample 16 is equipped with one or several sensors 24 configured to measure at least one component parameter which is dependent or indicative of a curing status.

Fig. 2 shows a first embodiment of the sample 16. The sample 16 is a sample made of the same material as the component 12, such as CFRP, wherein at least one optical fibre 26 is impregnated therein. The sensor 24 includes optical measurement means 28 for measuring an amount of light transmitted through the optical fibre. This amount of light depends on stress or strain induced into the sample 16. Stress or strain is one possible component parameter which depends on the actual curing status. Hence, the actual curing rate during a curing of the sample 16 within the autoclave 18 can be measured by the sensor 24.

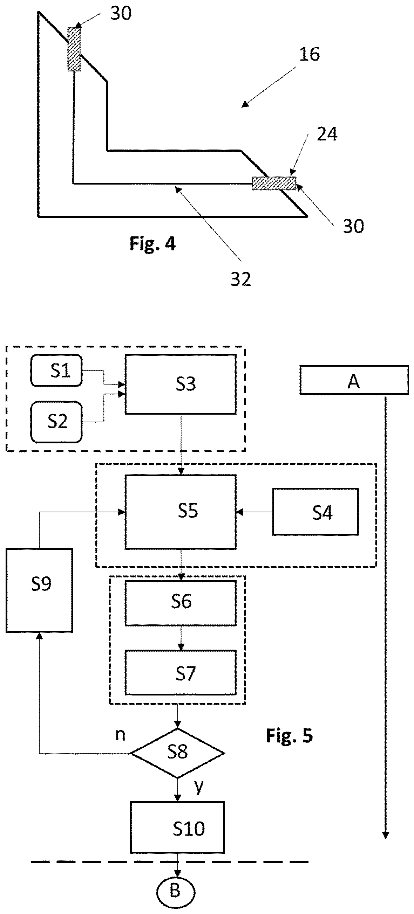

Fig. 3 and 4 show a further possible embodiment for the sample 16 wherein Fig. 3 shows the sensor 24 which is configured as graphene detector 30, and Fig. 4 shows the exemplary sample 16 equipped with such graphene detector 30. For manufacturing the graphene detector 30, a carbon composite ply 32 is selected and a graphene layer 34 is deposited using a deposition process or chemical vapor deposition (CVD) process to obtain a graphene layer 34 on the carbon composite ply 32. Then, a highly conductive material such as gold is deposited using a sputtering process or a CVD process to obtain thin layers 36 of conductive material. Then, a thin layer of resin 40 is applied on the area excluding the layers of conductive material 36.

Fig. 4 shows the sample 16 equipped with such graphene detector 30. For obtaining the sample 16, the ply has shown in Fig. 3 is prepared. Then, the prepared ply 32 with the graphene layer 34, the layer of conductive material 36 and the layer of resin 40 is placed in the area of interest within a composite stack during a lay-up process.

For measuring the component parameter indicative of the curing rate, an ampere meter is attached to the layers of conductive material 36. Monitoring the ionic flow via the graphene detector 30 in the form of current flow and the current can be corelated to the rate of cure.

In case that the function of the component 12 would not be affected by including the sensor 24 as shown in Fig. 2, Fig. 3 or Fig. 4, the component 12 itself can be provided with the sensor(s) 24 and can be used as a sample 16. In other cases, a set of samples 16 is especially prepared for a start-up procedure to obtain an optimised cure cycle for conducting the curing operation of the component 12 in the mass production.

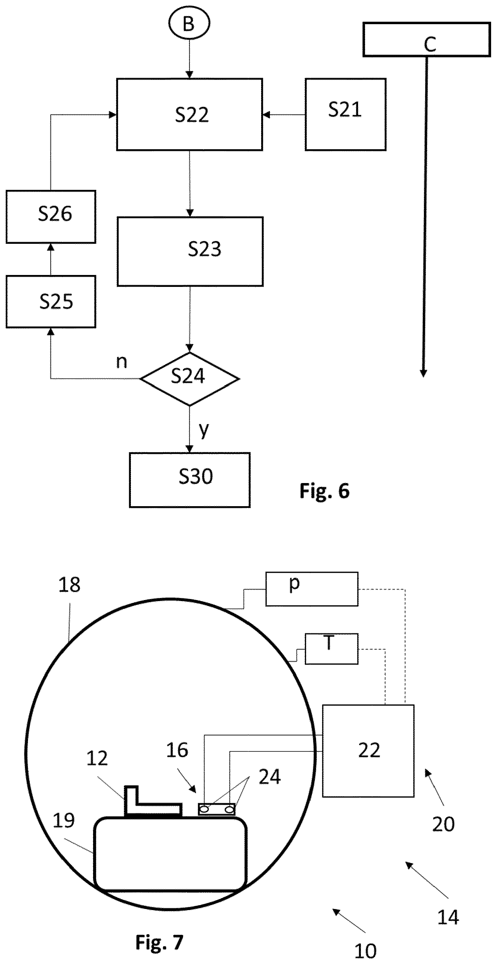

A preferred embodiment of this start-up procedure is now explained with reference to Fig. 5 and Fig. 6.

Fig. 5 shows a first part of the start-up procedure 42. This first part is used to validate a predicting model using the sample 16 and to provide an optimised curing cycle.

Fig. 6 shows a second part of a preferred start-up procedure 42 which refers to a calibration of the curing cycle with the component 12 to obtain a defined cure cycle ready for the mass production.

The reference signs in Fig. 5 and 6 mean the following:
- A: sample validating the model and providing optimized cure cycle
- B: Using sample cure cycle as initial cure cycle for component calibration
- C: calibration with the component to obtain cure cycle ready for production
- S1: Group Interaction Modelling (GIM)
- S2: finite element simulation (FE simulation)
- S3: 1st cure cycle
- S4: 1st sample
- S5: autoclave process and monitoring curing
- S6: measure sample properties
- S7: update cure cycle
- S8: check saturation of cure cycle
- S9: new sample - new cure cycle
- S10: sample cure cycle
- S21: 1st component - new sample
- S22: autoclave process and monitoring curing
- S23: measure component properties
- S24: component properties satisfied?
- S25: update cure cycle
- S26: next component - new sample
- S30: finalize cure cycle for further production
- n: no
- y: yes

According to the preferred embodiment, the start-up procedure 42 comprises the steps:
a) modelling an initial cure circle (first cure circle) dependent on the designed dimensions and nominal mechanical properties of the component 12 including defining an initial profile of the specific component parameter which depends on the curing state, as shown in S1, S2, and S3.
b) placing the sample 16 which is representative for the component 12 within the autoclave 18 wherein the sample 16 has the at least one sensor 24 impregnated therein for measuring the actual component parameter, see S4 and Figs. 1 to 4,
c) operating the autoclave 18 in accordance with the initial cure cycle while monitoring the actual component parameter with the at least one sensor 24, see S5 and Fig. 1,
d) measuring the actual mechanical properties of the sample 16, as indicated in S6,
e) updating the cure cycle, see S7,
f) repeating steps b) to e) until the actual mechanical properties of the sample 16 are in accordance with the nominal mechanical properties in order to obtain the defined cure circle for operating the curing operators 14 in the mass production of the component; indicated by steps S8, S9 and S10.

According to the preferred embodiment shown in Fig. 5, the step a) is conducted as follows:
In order to obtain the initial cure circle - first cure circle -, Group Interaction Modelling (GIM) S1 - see literatures [3] to [5] for further details - is used first used to predict the engineering properties of the cured specific resin to be used in the component 12. These properties include dynamic mechanical properties of modulus and loss tangent as function of temperature and rate, and the non-linear stress-strain response through yield as a function of strain rate under tension and compression.

The key properties of volume, thermal expansion coefficient and elastic modulus are then predicted through a standard cure circle to provide input to finite element simulations S2 of residual stress development in the cure process.

This modelling is used to define the first cure cycle S3 with a first set of functions of the autoclave operation parameters over the time.

Step b) is preferably conducted as follows:
A first selected representative sample 16 is placed in the autoclave 18, as this is shown in Fig. 1 - 4. As described above, the sample 16 should be representative of the complexity and the dimensions of the component 12 intended for manufacturing. The sample 16 has sensors 24 impregnated there within to measure the curing rate, hence, without impacting the mechanical properties or the finishing of the component 12. Alternatively, the component 12 can act as a sample 16 when the impregnated sensors do not impact its intended properties. Then, the autoclave process is conducted at step S5 of Fig. 5, and the curing is monitored using the sensors 24 which are connected with the real time controller 22. In the autoclave process S5, the autoclave 18 is operated by the first cure cycle coming out of the Group Interaction Modelling (GIM) S1, and the curing is monitored using one or many known methods to calculate the optimum curing rate:
   - In a first of the methods to calculate the optimum curing rate, the curing can be monitored by measuring the induced stress or strain of the representative sample 16. The induced strain, for example, can be measured optically by the optical fibre 26 impregnated in the sample 16.
   - Alternatively 8 (or additionally), the curing can be monitored based on the graphene detector 30. The graphene detector 30 can also be used for structural health monitoring and other applications.

For conducting step d) the intended properties of the sample 16 can be measured, after the curing, by destructive testing or by any known non-destructive testing method - step S6 in Fig. 16.

For conducting step e) - step S7 in Fig. 16 -, the cure cycle is preferably updated based on the data from the monitoring during step c) and from the testing of step d). An update is conducted when the measured intended properties of the sample 16 do not meet the pre-required standard.

The start-up procedure 42 contains a check for saturation of the cure cycle S8. Here, the updated cure cycle is compared with the previous cure cycle (s). If the cure cycle does not saturate, i. e. the monitoring and testing shows that the intended properties of the sample still do not meet the pre-required standards, the process is continued with a new sample 16.

When the cure cycle finally does saturate, the first part of the preferred start-up procedure 42 which relates to the sample curing process A and process of validating the model with the sample 16 is finished.

The obtained saturated cure cycle can then be calibrated with a component curing which is shown in the second part of the start-up procedure 42 shown in Fig. 6. This part starts with the saturated cure cycle as input for the real time controller 22 - indicated by B in Fig. 5 and 6.

This second part of the process follows the steps S21 - S30 similar to the sample curing steps S3 - S10 explained above except that the actual component 12 is cured together with at least one sample 16, and the cure cycle is updated based on properties of the cured samples, eventually with an additional measurement of mechanical properties of the component 12, preferably by non-destructive testing.

The calibration of the component 12 improves the accuracy of the needed curing cycle.

Fig. 7 shows the curing system during this second part of the start-up procedure.

The steps of the second part of the start-up procedure 42 as shown in Fig. 6 and 7 can also be used in real time monitoring of the curing during mass production. For the actual real time curing for production, preferably, samples are used to drive the autoclave to the needed curing.

Hence, during a production of a component, a sample with sensors is placed also in the autoclave 18 in order to monitor the actual curing rate and to control the autoclave operation parameters in real time in response to the output of the sensors 24 of the sample 16.

Hence, according to a preferred embodiment of the curing method, a component 12 (especially a CFRP part for an aircraft) is cured within the autoclave while monitoring the curing by the induced stress using a sample 16 with sensors 24 which are connected to the real time controller 22.

As described above, preferred embodiments of the invention relate to methods and devices enabling an optimized cure cycle with an optimized control of operation parameters in an autoclave (18). In order to monitor the curing and providing a real time control, a sample (16) having sensors (24) for measuring a component parameter which depends from the curing state is placed in the autoclave (18). A first cure cycle is obtained by modelling the component and its curing, especially by GIM and simulations. Then the actual monitored curing rate and measured properties of the cured sample (16) is compared with the model, and the cure cycle is updated when needed. Further, a similar sample (16) may be used for calibrating the curing during a first component production or during further productions of subsequent components (12).

### Reference sign list:

- 10: curing system
- 12: component
- 14: curing apparatus
- 16: sample
- 18: autoclave
- 20: autoclave control system
- 22: real time controller
- 24: sensor
- 26: optical fibre
- 28: optical measurement means
- 30: Graphene detector
- 32: carbon composite ply
- 34: graphene layer
- 36: layer of conductive material
- 40: layer of resin
- 42: start-up procedure
- A: sample validating the model and providing optimized cure cycle
- B: Using sample cure cycle as initial cure cycle for component calibration
- C: calibration with the component to obtain cure cycle ready for production
- S1: Group Interaction Modelling (GIM)
- S2: finite element simulation (FE simulation)
- S3: 1^{st} cure cycle
- S4: 1^{st} sample
- S5: autoclave process and monitoring curing
- S6: measure sample properties
- S7: update cure cycle
- S8: check saturation of cure cycle
- S9: new sample - new cure cycle
- S10: sample cure cycle
- S21: 1^{st} component - new sample
- S22: autoclave process and monitoring curing
- S23: measure component properties
- S24: component properties satisfied?
- S25: update cure cycle
- S26: next component - new sample
- S30: finalize cure cycle for further production
- n: no
- y: yes

## Claims

1. Start-up procedure (42) for a curing method to be conducted in a mass production of a fibre-reinforced composite component (12) for curing said fibre-reinforced composite component (12) wherein the curing method is conducted in a curing apparatus (14) including an autoclave (18) and an autoclave control system (20) for controlling operation parameters (p, T) of the autoclave (18) in accordance with a defined cure cycle with predetermined functions of autoclave operation parameters over the time, the start-up procedure (42) comprising the steps:
a) modelling an initial cure cycle dependent from designed dimensions and nominal mechanical properties of the component (12) including defining an initial profile of a specific component parameter which depends from the curing state,
b) placing a sample (16) representative for the component (12) within the autoclave (18), wherein the sample (16) has at least one sensor (24) impregnated therein for measuring the actual component parameter,
c) operating the autoclave (18) in accordance with the initial cure cycle while monitoring the actual component parameter with the at least one sensor (24),
d) measuring the actual mechanical properties of the sample (16),
e) updating the cure cycle,
f) repeating steps b) to e) until the actual mechanical properties of the sample are in accordance with the nominal mechanical properties in order to obtain the defined cure cycle for operating the curing apparatus in the production of the component (12).

2. Start-up procedure according to claim 1, wherein step a) comprises at least one or several of the steps:
a1) selecting the dimensions, shape and materials of the fibre-reinforced composite component (12) to achieve a carbon fibre-reinforced plastic component;
a2) using Group Interaction Modelling (GIM) in order to predict properties of the cured resin of the fibre-reinforced composite component (12), preferably including dynamic mechanical properties of modulus und loss tangent as function of temperature and cure rate and/or including the nonlinear stress-strain response through yield as a function of strain rate under tension and compression;
a3) predicting key properties of volume, thermal expansion coefficient and elastic modulus through a standard cure cycle, and using this as input for a simulation of residual stress development during curing,
a4) defining an initial profile of stress or strain induced during the curing into the component (12) and/or of the cure rate as the component parameter.

3. Start-up procedure according to any of the preceding claims, wherein step b) comprises one or several of the steps:
b1) using a component (12) as sample (16) in a case where the at least one sensor (24) does not influence the intended functions of the component (12),
b2) using a sample (16) other than the component (12) wherein the sample (16) is comparable in dimensions and complexity with the component (12);
b3) using a sample (16) with sensors (24) for measuring at least one of stress, strain and/or cure rate as the component parameter,
b4) using a sample (16) with an optical fibre (26) for optically measuring stress and/or strain within the sample (16),
b5) using a sample (16) with a graphene detector (30) for real time measuring of the curing rate,
b6) using a sample (16) having the same specific resin as the component (12),
b7) using a sample (16) having the same fibres and/or the same fibre distribution as the component (12),
b8) using a sample (16) having a dimension and/or a form which corresponds, within a predetermined tolerance, to the dimensions and/or the form, respectively, of the component (12).

4. Start-up procedure according to any of the preceding claims, wherein step c) comprises one or several of the following:
c1) controlling the autoclave (18) in real time,
c2) setting the autoclave operation parameters in real time in accordance with the first cure cycle;
c3) monitoring and controlling real time operations of the autoclave (18) for curing the specific resin of the sample by comparing the measured specific component parameters with the profile of the specific component parameters achieved by the modelling of step a).

5. Start-up procedure according to any of the preceding claims, wherein step d) comprises one or several of the following:
d1) measure the actual properties of the sample (16) by destructive testing;
d2) measure the actual properties of the sample (16) by non-destructive testing.

6. Start-up procedure according to any of the preceding claims, wherein step e) comprises one or several of the following:
e1) update the cure cycle using data from the monitoring of step c),
e2) update the cure cycle using data from the measuring of step d),
e3) update the profile of the component parameter,
e4) comparing the measured specific component parameter with the model used in step a),
e5) comparing the measured specific component parameter against a modelled parameter achieved by a Group Interaction Model of the specific resin of the component (12).

7. Start-up procedure according to any of the preceding claims, wherein step f) comprises a step of calibrating of a component cure cycle comprising:
f1) placing an actual component (12) to be cured together with a sample (16) having the at least one sensor (24) impregnated to measure the actual component parameter which depends from the curing state,
f2) operating the autoclave (18) in accordance with the updated cure cycle obtained in step e) and monitoring the actual component parameter with the at least one sensor (24) of the sample (16),
f4) updating the cure cycle to obtain a calibrated component cure cycle to be used in further production of the component (12).

8. Start-up procedure according to claim 7, wherein the step of calibrating the component cure cycle further comprises:
f3) measuring the actual mechanical properties of the sample (16) and/or the component (12) cured in step f2), wherein f4) is conducted on basis of the data obtained in step f3).

9. Method for curing a fibre-reinforced composite component (12) in a mass production of the component (12) using a curing apparatus (14) including an autoclave (18) and an autoclave control system (20) for controlling operation parameters of the autoclave (18) in accordance with a defined cure cycle with predetermined functions of autoclave operation parameters over the time, wherein the method comprises conducting the start-up procedure (42) according to any of the preceding claims, and operating the autoclave (18) in accordance with the cure cycle obtained thereby.

10. Method according to claim 9, further comprising:
g1) placing an actual component (12) to be cured together with a sample (16) having the at least one sensor (24) impregnated to measure the actual component parameter which depends from the curing state,
g2) monitoring the actual component parameter with the at least one sensor (24) of the sample (16) and operating the autoclave (18) in accordance with the defined cure cycle and controlling the autoclave operation parameters in real time in response to the defined cure cycle and in response to the monitoring.

11. Method according to claim 10, further comprising at least one of:
g3) measuring the actual mechanical properties of the sample (16) and/or the component (12) cured in step g2),
g4) updating the cure cycle to obtain a newly defined cure cycle to be used in subsequent production of further components (12).

12. Curing system for conducting the procedure of any of the claims 1 to 8 or the method according to any of the claims 9 to 11, comprising a curing apparatus (14) including an autoclave (18) and an autoclave control system (20) for controlling operation parameters of the autoclave (18) in accordance with a defined cure cycle and at least one sample (16) made of the same material as the component (12) to be produced and having at least one sensor (24) impregnated therein for measuring a specific component parameter which depends from a curing state.

13. Curing apparatus (14) including an autoclave (18) and an autoclave control system (20) for controlling operation parameters of the autoclave (18) in accordance with a defined cure cycle wherein the autoclave control system (20) is configured to carry out the procedure of any of the claims 1 to 8 or the method of any of the claims 9 to 11.
